# EUROPEAN PATENT SPECIFICATION

(11) **EP 2 337 272 B1**
(45) Date of publication and mention of the grant of the patent: **24.10.2012**
(21) Application number: 09306269.3
(22) Date of filing: 18.12.2009
(51) Int. Cl.: H04L 12/56

(54) **System and method for routing data units**
System und Verfahren zum Leiten von Dateneinheiten
Système et procédé d'acheminement d'unités de données

(43) Date of publication of application: 22.06.2011
(73) Proprietor: Alcatel Lucent, 75007 Paris (FR)
(72) Inventor: Papadimitriou, Dimitri, 1190, Bruxelles (BE)
(74) Representative: ALU Antw Patent Attorneys

(56) References cited:
- US-A1- 2007 091 794
- YOSHIHIRO T: "A Single Backup-Table Rerouting Scheme for Fast Failure Protection in OSPF" IEICE TRANSACTIONS ON COMMUNICATIONS, COMMUNICATIONS SOCIETY, TOKYO, JP, vol. E91B, no. 9, 1 September 2008 (2008-09-01), pages 2838-2847, XP001516405 ISSN: 0916-8516
- ATLAS A ET AL: "Basic Specification for IP Fast-Reroute: Loop-free Alternates; draft-ietf-rtgwg-ipfrr-spec-base-08.txt" IETF STANDARD-WORKING-DRAFT, INTERNET ENGINEERING TASK FORCE, IETF, CH, vol. rtgwg, no. 8, 6 September 2007 (2007-09-06), XP015051641 ISSN: 0000-0004

## Description

### Technical field

The present invention relates to a system for routing data units according to the preamble of claim 1 and a method for routing data units.

US 2007/091794 discloses a technique which is based on the setup of backup tunnels (GRE, IP, or IP/MPLS) and is intended to work with a Border Gateway Protocol (BGP), i.e. a protocol for inter-domain routing. More in particular, US 2007/091794 is related to a method wherein a backup tunnel is created within an inter-autonomous system (AS) for reaching an alternative inter-AS link, when a first inter-AS link fails.

In the prior art so-called "by-passing" solutions exist. According to this solution a topology change is by-passed by using tunnels not affected by the change. Such methods typically suffer from computational complexity, tunnel maintenance and impact on the forwarding plane.

Other solutions use a sequencing of the Forwarding Information Base (FIB) updates, such as timely synchronized FIB updates or topologically ordered FIB updates upon occurrence of a failure.

### Summary

The object of the invention is to provide a method and system with an improved re-convergence process when a topology change occurs, e.g. in case of a failure of a link or node.

According to an embodiment of the invention there is provided a system for routing data units, comprising:
- a routing information base (RIB) storing routing entries typically composed by a destination, a next-hop interface, and a metric;
- a forwarding information base (FIB) storing forwarding information used to forward data units to a plurality of destinations;
- a computing function for computing for each destination of said plurality of destinations a normal shortest path and an alternate shortest path using routing information from adjacent nodes;
   said forwarding information base storing for each of said plurality of destinations normal forwarding information and alternate forwarding information necessary to forward a data unit using the normal shortest path and the alternate shortest path, respectively;
- a forwarding control means for indicating to at least a following hop of the alternate shortest path that the alternate forwarding information should be used for this data unit.

By storing at any time not only forwarding information for the shortest path but also for an alternate shortest path, it could be said that precautionary measures are taken before a failure actually occurs. Upon failure, the system can react immediately by using the alternate shortest path. Moreover by indicating to a following hop of the alternate shortest path that the alternate forwarding information should be used for the destination loop mitigation is reduced in a simple and effective way.

According to another embodiment of the invention there is provided a micro-loop mitigation technique triggering the downstream neighbor criteria after a topological change.

According to yet another embodiment of the invention, alternate shortest path pre-computation is coupled with a loop mitigation mechanism. An embodiment of the invention is based on the basic idea consisting in relaxing the loop-free criteria before a topological change occurs, however, guaranteeing that the alternate shortest path can be rapidly activated at the next hop along the alternate path. The use of alternate shortest paths will ensure that after re-convergence the triggered alternate path remains stable.

According to a preferred embodiment of the routing system, the system comprises a routing engine with the RIB and the computing function, wherein the routing entries of the RIB are computed by the computing function based on routing information received from adjacent nodes and/or on local information; and a forwarding engine comprising the FIB and the forwarding control means.

Whenever there is a topological change the routing engine will receive messages in that regard, e.g. messages advertising a new node or withdrawing a node, and the computing function will re-compute the shortest and alternate shortest path. In fact by re-computing the alternate shortest path it is determined a priori which path to use if a certain link fails.

According to a preferred embodiment the forwarding control means comprises a marking means for marking a data unit when the alternate forwarding information should be used. Note that the expression "marking" should be explained in the broad sense referring to any possible indication added to or taken up in the data unit to indicate that the alternate shortest path should be used.

According to an alternative embodiment, instead of using marking, the next hop and/or further hops could be informed by the forwarding engine through other means such as the in-band sending of probes. E.g. probe packets could be sent toward the destination prefixes by the node detecting the failure. Probe packet injection towards the destination prefix affected by the failure is typically used when there is no "traffic" for the corresponding destination. According to an advantageous aspect, to prevent overload along the alternate forwarding path, a small number of probe packets is sent to "activate" the alternate forwarding entry on nodes along the alternate path towards the destination. These probe packets are preferably dropped before crossing the local routing domain boundary so as to prevent leaking into neighboring domains or reaching hosts/terminals. For this purpose, the sending node can for instance set the TTL of these probe packets to the number of hops traversed along the alternate forwarding path to reach routing domain edges.

According to a further developed embodiment the computing means is adapted for computing the alternate shortest path such that it does not include the normal shortest path. In that way it is guaranteed that the alternate shortest path is a loop-free alternate path, as will be further elucidated below when a number of detailed embodiments are discussed.

A further aspect of an embodiment of the system of the invention provides in verification and selecting means for verifying if an incoming data unit to a destination is marked and for selecting the normal or alternate forwarding information accordingly if said destination is a member of said plurality of destinations. In a similar way, when probing is used instead of or in addition to marking, there could be provided means to deal with in-band probe packets and to take the appropriate action, i.e. using the normal or alternate forwarding information.

In certain cases the alternate path may not yet be loaded in the FIB. This may e.g. be due to limited FIB capacity. To address this aspect a further preferred embodiment comprises selection means for selecting an alternate forwarding entry for a destination from the RIB, when a marked data unit is received for said destination and there is no alternate forwarding information stored in the FIB for said destination.

According to another embodiment of the invention there is provided a method for routing data units, comprising: storing for each destination of a plurality of destinations:
- pre-computed normal forwarding information to be used normally; and
- pre-computed alternate forwarding information to be used in the event of a failure affecting the normal forwarding information;
   and
   performing the following steps when a data unit has to be sent to a first destination of said plurality of destination:
   in the event of a failure affecting the normal forwarding information, indicating to at least one following hop of the alternate shortest path that the alternate forwarding information should be used for this data unit;
- sending the data unit
   using the alternate forwarding information for said first destination, if an indication is received; or
   using the normal forwarding information for said first destination, if no indication is received.

According to a preferred embodiment, the indicating comprises marking the data unit, and the sending of the data unit uses the alternate forwarding information for said first destination, if the data unit is marked; or the normal forwarding information for said first destination, if the data unit is not marked. Such a marking will then indicate to the next hop (and possibly to further following hops) whereto the data unit is forwarded that the alternate shortest path should be used. This will allow the next hop to use the alternate forwarding information for transmitting the data unit to any further hops of the alternate shortest path. According to an alternative or additional indicating step, in-band probing could be used to indicate to at least one following hop of the alternate shortest path that the alternate forwarding information should be used for this data unit.

According to a further developed embodiment thereof the method further comprises performing the following steps when a data unit for the first destination is received to be forwarded: verifying if the data unit is marked; and forwarding the data unit using the alternate forwarding information, if the data unit is marked. Again similar actions can be taken if in-band probing is used.

According to a preferred embodiment of the method of the invention the method further comprises for each destination of said plurality of destinations, pre-computing for each destination a normal shortest path and an alternate shortest path not comprising said normal shortest path, taking account of topology information derived from routing information received from adjacent nodes; wherein said storing consists in storing the normal forwarding information corresponding with the normal shortest path and the alternate forwarding information corresponding with said alternate shortest path.

According to a further developed embodiment comprising marking of data units in the event of a failure affecting the shortest path for a destination, the method further comprises:
receiving a marked data unit for a second destination for which no alternate path is stored;
loading an alternate forwarding entry for said second destination from a routing information base storing routing information received from adjacent nodes.

Further advantageous features are disclosed in the dependent claims. It is noted that the features of different dependent claims may be combined where judged possible by the person skilled in the art.

The accompanying drawings are used to illustrate presently preferred non-limiting exemplary embodiments of the present invention. The above and other advantages, features and objects of the invention will become more apparent and the invention will be better understood from the following detailed description when read in conjunction with accompanying drawings.

### Brief description of the figures

Figure 1A is a node graph of an exemplary topology for illustrating an embodiment of the invention.
Figure 1B illustrates schematically the content of the Forwarding Information Base (FIB) for node u of the node graph of figure 1A, according to an exemplary embodiment of the invention.
Figure 2 is a flowchart for illustrating an embodiment of the method of the invention.
Figure 3 illustrates schematically the architecture of a router system.

### Description of embodiments

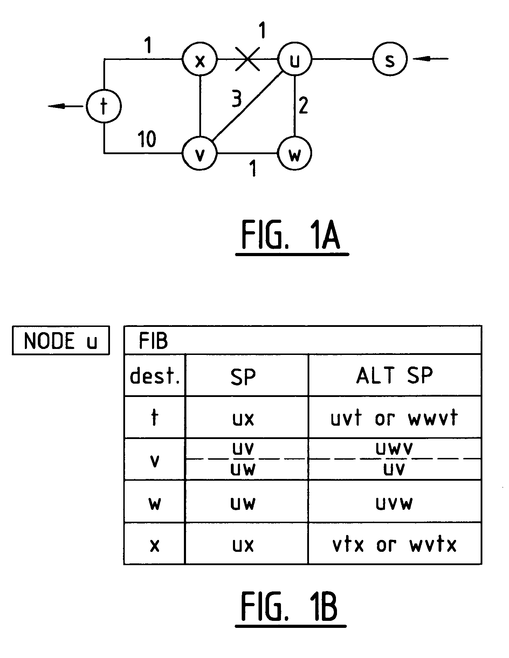

Before explaining in detail the example of figures 1A and 1B, first a number of general terms will be defined in order to better understand the basic ideas behind the invention and the problem solved by embodiments of the invention.

Let G = (V, E, ω) be a weighted undirected graph with positive edge cost ω, where V is the set of vertices (|V| = m) and E is the set of edges (|E| = n). For s, t ∈ V, let d(s,t) denote the cost of a path from s to t in G, where the cost of a path is the sum of the weights along its edges. For the pair s, t ∈ V, s ≠ t, if there exists a vertex u adjacent to s such that d(u,t) < d(s,u) + d(s,t), i.e., u is a loop-free neighbor of s to t, then the path (v₀ (=s), v₁, ..., vₘ (=t)) is a loop free alternate path where d (vᵢ,vₘ) < d (vᵢ-1,vₘ) + d(vᵢ₋₁,vᵢ) for all i.

For the pair s, t ∈ V, s ≠ t, if there exists a vertex u adjacent to s such that d(u,t) < d(s,t), i.e., u is the downstream neighbor of s to t, then the path (v₀(=s), v₁, ..., vₘ(=t)) is a distance decreasing downstream path where d (vᵢ, vₘ) < d(vᵢ₋₁,vₘ) for all i. As a particular case, neighbor u of edge s is the downstream SPF neighbor of s for destination t, if u provides the shortest path to t according to a shortest-path first (SPF) routing scheme. The set of downstream paths is a subset of the set of loop-free alternate paths meeting the condition d(vᵢ,vₘ) < d(vᵢ₋₁,vₘ) for all i.

Forwarding is a function performed on each node (edge), in which it is independently decided how to map a given destination to an outgoing port so as to forward data units towards the destination. The information necessary to perform this mapping is stored in the Forwarding Information Base (FIB) of each node. Typically, the FIB includes for any destination an entry identifying the outgoing port number to which data units for a given destination should be forwarded. The FIB entries are deduced from information in a Routing Information Base (RIB) populated and maintained by means of routing update messages. Such routing update messages typically allow a node to maintain a coherent full view of the graph at any given instant in time, or in other words, these messages allow a node to have non-local knowledge about the graph topology. When the topology changes, the appropriate routing update messages are exchanged between the nodes, i.e. the nodes react dynamically to topological changes due to e.g. a link/node failure, which leads to a recalculation of the RIB entries.

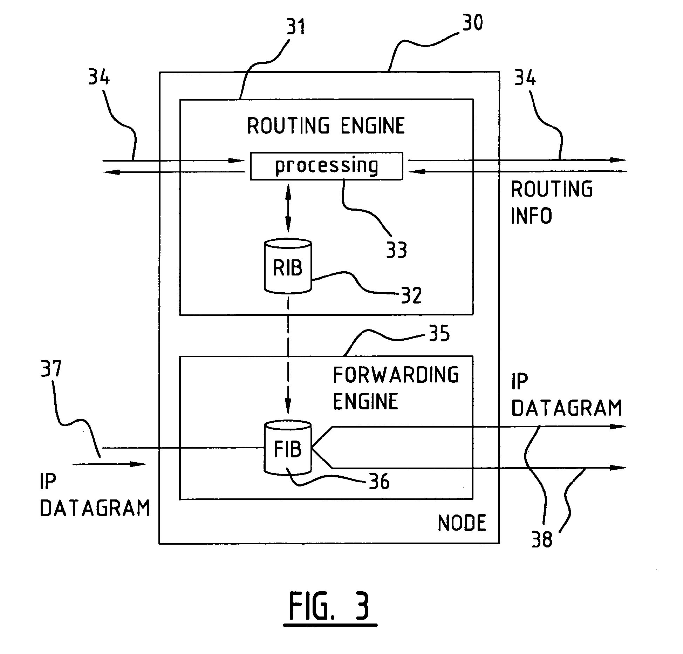

Figure 3 illustrates schematically the architecture of a typical router system 30 comprising a routing engine 31 with a RIB 32 and a routing information processing part 33, and a forwarding engine 35 with a FIB 36. The routing engine 31 processes routing information 34 received from its peers in order to update the RIB 32 and maintain a full view of the topology of the graph. The forwarding engine 35 forwards incoming packets based on the information in the FIB 36. The processing part 33 comprises a computing function for computing, for a number of destinations, both the shortest path and a loop-free alternate shortest path based on the routing information 34. The forwarding information associated with the computed shortest path and the computed alternate shortest path is stored in the FIB 36.

A recognized problem consists in minimizing the re-convergence time upon occurrence of a topological change. Basically this means that each node will need to retrieve a coherent full view of the graph after the topological change so that recomputed RIB entries lead to FIB entries along loop-free paths for the maximum number of destinations, wherein a percentage of the destinations may be identified as being unrecoverable upon failure occurrence. Formally, this means that by finding for any path from s to t, (s,t ∈ V, s ≠ t) passing through u, a vertex v adjacent to u such that
i) before topological change: d(v,t) < d(v,u) + d(u,t), i.e. the path (s, ..., u, v, ..., t) is a loop-free alternate path for u to t and
ii) after topological change: d(v,t) < d(u,t) i.e. the path (s, ..., u, v, ..., t) is a downstream path for u to t, it is ensured that after topology change node u can safely switch traffic to neighbor v, its new next-hop for destination t.

Micro-loops may form during the periods when a network is re-converging following any graph topology change resulting into inconsistent FIBs during the transition from the RIB/FIB entries before and after failure. Micro-loops occur when each router in a topological cycle of routers has the next router in the cycle as a next hop for a given prefix. A basic exemplary scenario is depicted in figure 1A, wherein the arrows indicate the traffic flow from source s to destination t.

Initially the downstream path from u to t is 2 (u,x,t) and the downstream path from v to t is (v,u,x,t) or (v,w,u,x,t). After vertex (u,x) failure, the downstream path from u to t is (u,v,t) or (u,w,v,t). However, if v has not yet received the corresponding routing update, its downstream path to t is still passing via u, either using (v,u,x,t) or (v,w,u,x,t). In other words, v is not a downstream neighbor of u for t. The result thereof is a temporary micro-loop between u and v for traffic directed to destination t. Here this problem is caused by inconsistent RIB/FIB entries between nodes u and v, resulting from the propagation time of the routing update messages from u to v, as well as the different computation times of the RIB entries, and the RIB/FIB update/installation time.

Micro-loop control strategies fall into two basic classes:
- micro-loop mitigation: reducing but not eliminating the formation of micro-loops.
- micro-loop avoidance: preventing the formation of micro-loops.

Knowing that the loop-free neighbor criteria is not verified before the topological change (e.g. when traffic directed to t arrives at v, v forwards this traffic to u, i.e. v is not a loop-free neighbor of u), embodiments of the invention provide a micro-loop mitigation technique triggering the downstream neighbor criteria after a topological change (e.g. when traffic from u directed to t arrives at v, v does not forward traffic back to u, i.e. v becomes a downstream neighbor of u).

According to an embodiment of the invention, alternate shortest path pre-computation (i.e. before a topological change occurs) is coupled with a loop mitigation mechanism. An embodiment of the invention is based on the basic idea consisting in relaxing the loop-free criteria before a topological change occurs, however, guaranteeing that the alternate shortest path can be rapidly activated at the next hop along the alternate path. The use of alternate shortest paths will ensure that after re-convergence the triggered alternate path remains stable.

Now an embodiment of the method of the invention performed in a node u will be explained. In a first aspect a loop-free alternate shortest path at node u is calculated for a destination. The outgoing ports corresponding with the shortest path and the alternate shortest path are stored in the FIB of node u. This is illustrated in figure 1B for the example of figure 1A. Note that figure 1B mentions for the different possible destinations t, v, w, x, the shortest path and the alternate shortest path. However, the skilled person will understand that in reality it is not the shortest path itself (or the alternate shortest path itself) which is stored in the FIB. Instead, each FIB entry comprises the outgoing port (towards the next-hop along the path) together with the destination (of the path). The pre-computation of those paths is based on knowledge of the topology by using the information present in the RIB before a topology change.

According to a second aspect of this embodiment, upon failure detection of a link (u,x), node u contiguous to link (u,x) will mark packets before sending them to its next hop neighbor v along the alternate shortest path for destination t. Such a mark will indicate to node v that it should use the alternate shortest path for destination t.

According to a further aspect, node v receiving the marked packet will either use the alternate shortest path from the FIB, if it is already loaded in the FIB, or will load an alternate forwarding entry from the RIB for destination t. In this embodiment it is assumed that a node pre-computes an alternate routing entry per destination address prefix in its RIB. In a case where the corresponding routing entries are not preloaded in the FIB, typically a trigger is provided to load the corresponding entry from the RIB upon traffic drop for a "known" destination, so that buffering can be avoided.

Note that the marking is not limited to the next hop along the alternate shortest path. Typically, marking the packets is continued until the loop-free condition is clarified. This means that the next hop along the alternate shortest path can itself trigger its own next hop neighbor to forward traffic along its shortest path towards destination t. Indeed, as long as a loop-free node for destination t is not reached along the alternate shortest path, traffic directed towards t might otherwise still be lost.

The skilled person will understand that the marking can be done in many different ways. Purely for illustrative purposes, two examples are given which can be used in IPv4 and IPv6 packet headers. Two possible marking techniques are Packets Scheduling Class (PSC) conserving and non-PSC conserving.

In the PSC conserving case, the Drop Precedence bits are set to a higher value than other packets of the PS Class. For example, packets in Assured Forwarding (AF) PHB group provides forwarding of IP packets in N independent AF classes AFi, 1 =< i =< N. Within each AFi class, an IP packet is assigned one of M different levels of drop precedence, 1 =< j =< M. Thus an IP packet that belongs to an AF class i and has drop precedence j is marked with the AF codepoint AFij, where 1 <= i <= N and 1 <= j <= M. In the current specifications, four classes (N=4) with three levels of drop precedence in each class (M=3) are defined with a configuration such that within an AF class, the probability of a node dropping an IP packet decreases with the drop precedence value. In other words AF43 traffic is dropped before AF42 and AF42 before AF41. In such a case a AF44 setting would be perfectly acceptable i.e. 100111 if encoded over 6 bits. Note that such a setting would not require "standardization", as it is allowed for local use per RFC 2474.

In the non-PSC conserving case, a dedicated PS sub-Class is used. This assumes that new sub-classes can be defined. The "lower" AF class is AF1x, thus AF0x(000xxx) could be defined and the corresponding CSO class (000xxx) class defined in RFC 2474 would have to be replaced. Thus, typically, in the non-PSC conserving case there is less flexibility if the newly defined class has to remain compliant with the existing definitions.

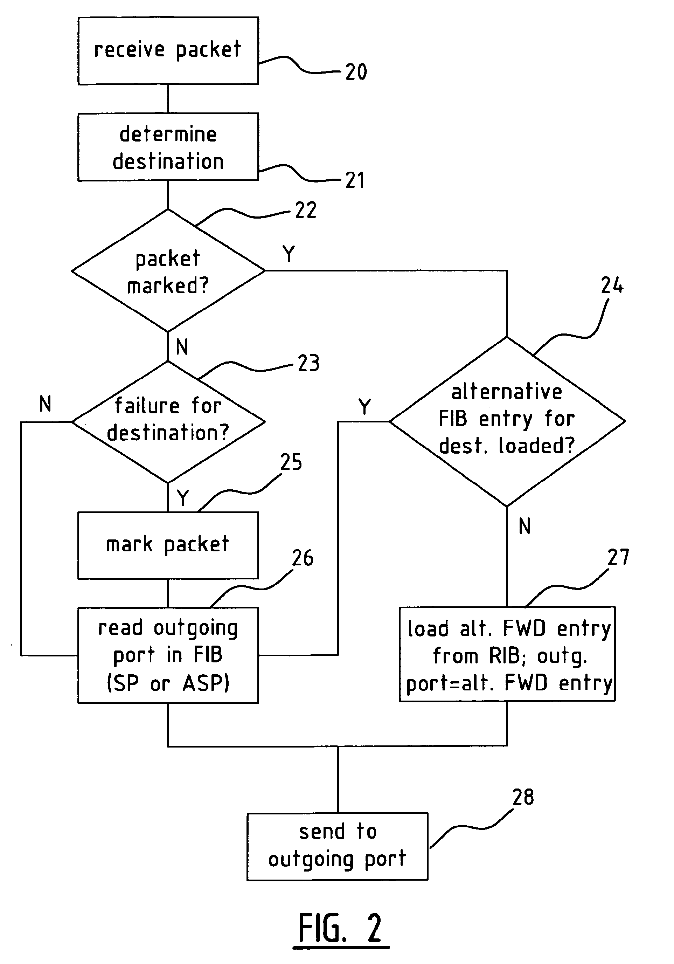

Now an embodiment of the method of the invention which can be employed in any node will be explained with reference to figure 2. In a first step 20 a packet is received. Next, the destination is determined, see step 21. Then, in step 22, it is verified whether the packet has been marked to indicate that an alternate entry in the FIB should be used. If the packet is marked, it is verified in step 24 whether an alternative FIB entry for the destination included in the packet is loaded in the FIB. If the alternative outgoing port is available in the FIB, then this port is read out (step 26), and the message is sent using the alternate outgoing port (step 28). If the alternate FIB entry in step 24 is not loaded in the FIB, then the alternative forwarding entry is loaded from the RIB in step 27. The packet is then forwarded using the alternative forwarding entry from the RIB as the outgoing port. If it is determined in step 22 that the received packet is not marked, it will be verified in step 23 whether a topology change relevant for the destination mentioned in the packet has occurred. If no failure for the destination has occurred, the normal outgoing port is read in step 26, and the packet is forwarded using the normal outgoing port in step 28. If there has been a failure, the packet is marked in step 25, and the alternate outgoing port is read out from the FIB in step 26. The marked packet is then sent using the alternate outgoing port in step 28.

By involving packet marking and data driven triggered FIB updates according to embodiments of the invention, the performance of the routing system and method is improved compared to techniques of the prior art which exclusively assume pre-configuration, control driven RIB/FIB updates.

The system and method of the invention are typically applicable to pure IP environments aiming at decreasing the recovery time by means of a re-routing technique that combines alternate shortest path pre-computation before topological change with a micro-loop mitigation mechanism after topological change.

While the principles of the invention have been set out above in connection with specific embodiments, it is to be clearly understood that this description is merely made by way of example and not as a limitation of the scope of protection which is determined by the appended claims.

## Claims

1. System for routing data units, comprising:
- a routing information base, hereinafter called RIB storing routing entries;
- a forwarding information base, hereinafter called FIB storing forwarding information used to forward data units to a plurality of destinations; **characterized in that** the system further comprises:
- a computing function adapted to compute for each destination of said plurality of destinations a normal shortest path and an alternate shortest path using routing information received from adjacent nodes and/or local information;
said forwarding information base being adapted to store for each of said plurality of destinations normal forwarding information and alternate forwarding information necessary to forward a data unit using the normal shortest path and
the alternate shortest path, respectively;
- a forwarding control means adapted to indicate to at least one following hop of the alternate shortest path that the alternate forwarding information should be used for this data unit; and further comprising means for selecting an alternate forwarding entry for a destination from the RIB, when a data unit with an indication is received for said destination and there is no alternate forwarding information stored in the FIB for said destination.

2. System of claim 1, wherein the forwarding control means comprises a marking means for marking a data unit when the alternate forwarding information should be used.

3. System of claim 1, wherein the forwarding control means comprises a in-band probe sending function for sending probe packets to indicate whether the alternate forwarding information should be used.

4. System of claim 1, wherein the computing function is adapted for computing the alternate shortest path such that it does not include the normal shortest path.

5. System of claim 1, comprising a routing engine and a forwarding engine,
said routing engine comprising the RIB and the computing function, wherein the routing entries of the RIB are computed by the computing function based on routing information received from adjacent nodes and/or on local information; and
said forwarding engine comprising the FIB and the forwarding control means.

6. System of claim 2, further comprising verification and selecting means for verifying if an incoming data unit to a destination is marked and for selecting the normal or alternate forwarding information accordingly if said destination is a member of said plurality of destinations.

7. Method for routing data units, comprising:
storing for each destination of a plurality of destinations:
- routing entries in a routing information based, herein after called RIB; and
- pre-computed normal forwarding information to be used normally; and
- pre-computed alternate forwarding information to be used in the event of a failure affecting the normal forwarding information; said pre-computed normal forwarding information and said pre-compute alternate forwarding information being stored in a forwarding information base, hereinafter called FIB storing forwarding information used to forward data units to a plurality of destinations;
and
performing the following steps when a data unit has to be sent to a first destination of said plurality of destination:
- in the event of a failure affecting the normal forwarding information, indicating to at least one following hop of the alternate shortest path that the alternate forwarding information should be used for this data unit;
- if an indication is received for said first destination that the alternate forwarding information should be used, verifying whether alternative forwarding information is loaded in the FIB;
- if it is loaded in the FIB, sending the data unit using the alternate forwarding information for said first destination; and
- if it is not loaded in the FIB, loading alternate forwarding information for the first destination from the RIB, and sending the data unit using the alternate forwarding information from the RIB; or
- using the normal forwarding information for said first destination, if no indication is received.

8. Method of claim 7, wherein the indicating comprises marking the data unit, and wherein the sending of the data unit uses the alternate forwarding information for said first destination, if the data unit is marked; or
the normal forwarding information for said first destination, if the data unit is not marked.

9. Method of claim 7, further comprising for each destination of said plurality of destinations:
pre-computing for each destination a normal shortest path and an alternate shortest path not comprising said normal shortest path, taking account of topology information derived from routing information received from adjacent nodes;
wherein said storing consists in storing the normal forwarding information corresponding with the normal shortest path and the alternate forwarding information corresponding with said alternate shortest path.

10. Method of claim 8, comprising performing the following steps when a data unit for the first destination is received to be forwarded:
verifying if the data unit is marked; and
forwarding the data unit using the alternate forwarding information, if the data unit is marked.

11. Method of claim 8, comprising:
receiving a marked data unit for a second destination for which no alternate path is stored;
loading an alternate forwarding entry for said second destination from a routing information base storing routing information received from adjacent nodes.

12. Method of claim 7, wherein the data units are IP packets.

13. Method of claim 8, wherein the marking is based on higher drop precedence using Packet Scheduling Class conserving.

14. Method of claim 8, wherein the marking is based on defining a degraded sub-class per Packet Scheduling Class.

15. Method of claim 7, wherein the indicating is continued until a loop-free condition is clarified by having the next hop along the alternate shortest path triggering its own next hop to forward traffic along the alternate shortest path towards the first destination, and repeating this as long as a loop-free node for the first destination is not reached.

## Patentansprüche

1. System zum Routen von Dateneinheiten, umfassend:
- Eine Routing-Informationsbasis, nachstehend RIB genannt, zum Speichern von Routing-Einträgen;
- eine Weiterleitungs-Informationsbasis, nachstehend FIB genannt, zum Speichern von Weiterleitungsinformationen, die für das Weiterleiten von Dateneinheiten an eine Vielzahl von Zieladressen verwendet werden; **dadurch gekennzeichnet, dass** das System weiterhin umfasst:
- Eine Berechnungsfunktion, welche geeignet ist, unter Verwendung von von benachbarten Knoten empfangenen Routing-Informationen und/oder von lokalen Informationen für jede Zieladresse der besagten Vielzahl von Zieladressen einen normalen kürzesten Pfad und einen alternativen kürzesten Pfad zu berechnen;
wobei die besagte Weiterleitungs-Informationsbasis geeignet ist, für eine jede der besagten Vielzahl von Zieladressen normale Weiterleitungsinformationen und alternative Weiterleitungsinformationen, die für das Weiterleiten einer Dateneinheit unter Verwendung des normalen kürzesten Pfades bzw. des alternativen kürzesten Pfades erforderlich sind, zu speichern;
- ein Weiterleitungssteuerungsmittel, welches geeignet ist, mindestens einem folgenden Hop des alternativen kürzesten Pfades anzugeben, dass die alternativen Weiterleitungsinformationen für diese Dateneinheit verwendet werden sollen; und weiterhin umfassend Mittel zum Auswählen eines alternativen Weiterleitungseintrags für eine Zieladresse aus der RIB, wenn eine Dateneinheit mit einer Angabe für die besagte Zieladresse empfangen wird und für die besagte Zieladresse keine alternativen Weiterleitungsinformationen in der FIB gespeichert sind.

2. System nach Anspruch 1, wobei das Weiterleitungssteuerungsmittel ein Markierungsmittel zum Markieren einer Dateneinheit, wenn die alternativen Weiterleitungsinformationen verwendet werden sollen, umfasst.

3. System nach Anspruch 1, wobei das Weiterleitungssteuerungsmittel eine In-Band-Test-Sendefunktion zum Senden von Testpaketen, um anzugeben, ob die alternativen Weiterleitungsinformationen verwendet werden sollen, umfasst.

4. System nach Anspruch 1, wobei die Berechnungsfunktion für das Berechnen des alternativen kürzesten Pfades, ohne den normalen kürzesten Pfad einzuschließen, geeignet ist.

5. System nach Anspruch 1, umfassend eine Routing-Maschine und eine Weiterleitungsmaschine, wobei die besagte Routing-Maschine die RIB und die Berechnungsfunktion umfasst, wobei die Routing-Einträge der RIB auf der Basis von von benachbarten Knoten empfangenen Routing-Informationen und/oder lokalen Informationen von der Berechnungsfunktion berechnet werden; und wobei die besagte Weiterleitungsmaschine die FIB und das Weiterleitungssteuerungsmittel umfasst.

6. System nach Anspruch 2, weiterhin umfassend Prüf- und Auswählmittel zum Prüfen, ob eine eingehende Dateneinheit für eine Zieladresse markiert ist, und zum entsprechenden Auswählen der normalen oder der alternativen Weiterleitungsinformationen, wenn die besagte Zieladresse der besagten Vielzahl von Zieladressen angehört.

7. Verfahren zum Routen von Dateneinheiten, umfassend:
Speichern, für jede Zieladresse der Mehrzahl von Zieladressen, von:
- Routing-Einträgen in einer Routing-Informationsbasis, nachstehend RIB genannt; und
- vorberechneten normalen Weiterleitungsinformationen zur normalen Verwendung; und
- vorberechneten alternativen Weiterleitungsinformationen für die Verwendung im Fall eines die normalen Weiterleitungsinformationen beeinträchtigenden Fehlers; wobei die besagten vorberechneten normalen Weiterleitungsinformationen und die besagten vorberechneten alternativen Weiterleitungsinformationen in einer Weiterleitungsinformationsbasis, nachfolgend FIB genannt, welche Weiterleitungsinformationen, die für das Weiterleiten von Dateneinheiten an eine Vielzahl von Zieladressen verwendet werden, speichert, gespeichert werden;
und
Ausführen der folgenden Schritte, wenn eine Dateneinheit an eine erste Zieladresse der besagten Vielzahl von Zieladressen gesendet werden soll:
- Im Fall eines Fehlers, welcher die normalen Weiterleitungsinformationen beeinträchtigt, Angeben, an mindestens einen folgenden Hop des alternativen kürzesten Pfades, dass die alternativen Weiterleitungsinformationen für diese Dateneinheit verwendet werden sollen;
- wenn für die besagte erste Zieladresse eine Angabe empfangen wird, dass die alternativen Weiterleitungsinformationen verwendet werden sollen, Prüfen, ob alternative Weiterleitungsinformationen in der FIB geladen sind;
- wenn sie in der FIB geladen sind, Senden der Dateneinheit unter Verwendung der alternativen Weiterleitungsinformationen für die besagte erste Zieladresse; und
- wenn sie nicht in der FIB geladen sind, Laden der alternativen Weiterleitungsinformationen für die erste Zieladresse aus der RIB, und Senden der Dateneinheit unter Verwendung der alternativen Weiterleitungsinformationen aus der RIB;
oder
- Verwenden der normalen Weiterleitungsinformationen für die besagte erste Zieladresse, wenn keine Angabe empfangen wird.

8. Verfahren nach Anspruch 7, wobei das Angeben das Markieren der Dateneinheit umfasst, und wobei für das Senden der Dateneinheit die alternativen Weiterleitungsinformationen für die besagte erste Zieladresse verwendet werden, wenn die Dateneinheit markiert ist; oder die normalen Weiterleitungsinformationen für die besagte erste Zieladresse verwendet werden, wenn die Dateneinheit nicht markiert ist.

9. Verfahren nach Anspruch 7, weiterhin für jede Zieladresse der besagten Vielzahl von Zieladressen umfassend:
Vorberechnen, für jede Zieladresse, eines normalen kürzesten Pfades und eines alternativen kürzesten Pfades, welcher den besagten normalen kürzesten Pfad nicht einschließt, unter Berücksichtigung von von den benachbarten Knoten empfangenen Routing-Informationen abgeleiteten Topologieinformationen;
wobei das besagte Speichern darin besteht, die dem normalen kürzesten Pfad entsprechenden normalen Weiterleitungsinformationen und die dem alternativen kürzesten Pfad entsprechenden alternativen Weiterleitungsinformationen zu speichern.

10. Verfahren nach Anspruch 8, umfassend das Ausführen der folgenden Schritte, wenn eine Dateneinheit für die erste Zieladresse für das Weiterleiten empfangen wird:
Prüfen, ob die Dateneinheit markiert ist; und
Weiterleiten der Dateneinheit unter Verwendung der alternativen Weiterleitungsinformationen, wenn die Dateneinheit markiert ist.

11. Verfahren nach Anspruch 8, umfassend:
Empfangen einer markierten Dateneinheit für eine zweite Zieladresse, für welche kein alternativer Pfad gespeichert ist;
Laden eines alternativen Weiterleitungseintrags für die besagte zweite Zieladresse aus einer Routing-Informationsbasis, in welcher von benachbarten Knoten empfangene Routing-Informationen gespeichert sind.

12. Verfahren nach Anspruch 7, wobei die Dateneinheiten IP-Pakete sind.

13. Verfahren nach Anspruch 8, wobei die Markierung auf einer höheren Drop-Precedence unter Beibehalten der Paketablaufsteuerungsklasse basiert.

14. Verfahren nach Anspruch 8, wobei die Markierung auf der Definierung einer degradierten Unterklasse pro Paketablaufsteuerungsklasse basiert.

15. Verfahren nach Anspruch 7, wobei das Angeben so lange fortgeführt wird, bis ein schleifenfreier Zustand geklärt ist, indem der nächste Hop längs des alternativen kürzesten Pfades seinen eigenen nächsten Hop ansteuert, um Verkehr längs des alternativen kürzesten Pfades an die erste Zieladresse weiterzuleiten, und Wiederholen dieses Vorgangs, solange kein schleifenfreier Knoten für die erste Zieladresse erreicht wird.

## Revendications

1. Système de routage d'unités de données, comprenant :
- une base d'informations de routage, ci-après dénommée RIB stockant des entrées de routage ;
- une base d'informations d'acheminement, ci-après dénommée FIB stockant des informations d'acheminement utilisées pour acheminer des unités de données vers une pluralité de destinations ; **caractérisé en ce que** le système comprend en outre :
- une fonction de calcul adaptée pour calculer pour chaque destination de ladite pluralité de destinations un chemin normal le plus court et un chemin alternatif le plus court en utilisant les informations de routage reçues de noeuds adjacents et/ou les informations locales ; ladite base d'informations d'acheminement étant adaptée pour stocker pour chacune de ladite pluralité de destinations des informations d'acheminement normal et des informations d'acheminement alternatif nécessaires pour acheminer une unité de données en utilisant le chemin normal le plus court et le chemin alternatif le plus court, respectivement ;
- des moyens de commande d'acheminement adaptés pour indiquer à au moins un saut suivant du chemin alternatif le plus court qu'il convient d'utiliser les informations d'acheminement alternatif pour cette unité de données ; et comprenant en outre des moyens pour sélectionner une entrée d'acheminement alternatif pour une destination depuis le RIB, lorsqu'une unité de données avec une indication est reçue pour ladite destination et qu'aucune information d'acheminement alternatif n'est stockée dans le FIB pour ladite destination.

2. Système selon la revendication 1, dans lequel les moyens de commande d'acheminement comprennent un moyen de marquage pour marquer une unité de données lorsqu'il convient d'utiliser les informations d'acheminement alternatif.

3. Système selon la revendication 1, dans lequel les moyens de commande d'acheminement comprennent une fonction d'émission de sondes intrabandes pour émettre des paquets sondes pour indiquer s'il convient d'utiliser les informations d'acheminement alternatif.

4. Système selon la revendication 1, dans lequel la fonction de calcul est adaptée pour calculer le chemin alternatif le plus court de sorte qu'il n'inclut pas le chemin normal le plus court.

5. Système selon la revendication 1, comprenant un moteur de routage et un moteur d'acheminement, ledit moteur de routage comprenant le RIB et la fonction de calcul, dans lequel les entrées de routage du RIB sont calculées par la fonction de calcul sur la base des informations de routage reçues de noeuds adjacents et/ou des informations locales, et ledit moteur d'acheminement comprenant le FIB et les moyens de commande d'acheminement.

6. Système selon la revendication 2, comprenant en outre des moyens de vérification et de sélection pour vérifier si une unité de données entrante vers une destination est marquée et pour sélectionner les informations d'acheminement normal ou alternatif en conséquence si ladite destination est un élément de ladite pluralité de destinations.

7. Procédé de routage d'unités de données, comprenant : le stockage pour chaque destination d'une pluralité de destinations :
- d'entrées de routage dans une base d'informations de routage, ci-après dénommée RIB, et
- d'informations d'acheminement normal précalculées à utiliser normalement ; et
- d'informations d'acheminement alternatif précalculées à utiliser en cas de défaillance affectant les informations d'acheminement normal ; lesdites informations d'acheminement normal précalculées et lesdites informations d'acheminement alternatif précalculées étant stockées dans une base d'informations d'acheminement, ci-après dénommée FIB stockant les informations d'acheminement utilisées pour acheminer les unités de données vers une pluralité de destinations ;
et
l'exécution des étapes suivantes lorsqu'une unité de données doit être envoyée vers une première destination de ladite pluralité de destinations :
- en cas de défaillance affectant les informations d'acheminement normal, indiquer à au moins un saut suivant du chemin alternatif le plus court qu'il convient d'utiliser les informations d'acheminement alternatif pour cette unité de données ;
- si une indication est reçue pour ladite première destination qu'il convient d'utiliser les informations d'acheminement alternatif, vérifier si des informations d'acheminement alternatif sont chargées dans le FIB ;
- si elles sont chargées dans le FIB, envoyer l'unité de données en utilisant les informations d'acheminement alternatif pour ladite première destination ; et
- si elles ne sont pas chargées dans le FIB, charger les informations d'acheminement alternatif pour la première destination depuis le RIB, et envoyer l'unité de données en utilisant les informations d'acheminement alternatif provenant du RIB ; ou
- utiliser les informations d'acheminement normal pour ladite première destination, si aucune indication n'est reçue.

8. Procédé selon la revendication 7, dans lequel l'indication comprend le marquage de l'unité de données, et dans lequel l'envoi de l'unité de données utilise les informations d'acheminement alternatif pour ladite première destination, si l'unité de données est marquée ; ou les informations d'acheminement normal pour ladite première destination, si l'unité de données n'est pas marquée.

9. Procédé selon la revendication 7, comprenant en outre pour chaque destination de ladite pluralité de destinations :
le précalcul pour chaque destination d'un chemin normal le plus court et d'un chemin alternatif le plus court ne comprenant pas ledit chemin normal le plus court, la prise en compte d'informations de topologie dérivées d'informations de routage reçues de noeuds adjacents ;
dans lequel ledit stockage consiste à stocker les informations d'acheminement normal correspondant au chemin normal le plus court et les informations d'acheminement alternatif correspondant audit chemin alternatif le plus court.

10. Procédé selon la revendication 8, comprenant l'exécution des étapes suivantes lorsqu'une unité de données pour la première destination est reçue pour être acheminée :
vérifier si l'unité de données est marquée, et acheminer l'unité de données en utilisant les informations d'acheminement alternatif, si l'unité de données est marquée.

11. Procédé selon la revendication 8, comprenant :
la réception d'une unité de données marquée pour une seconde destination pour laquelle aucun chemin alternatif n'est stocké ; le chargement d'une entrée d'acheminement alternatif pour ladite seconde destination depuis une base d'informations de routage stockant les informations de routage reçues de noeuds adjacents.

12. Procédé selon la revendication 7, dans lequel les unités de données sont des paquets IP.

13. Procédé selon la revendication 8, dans lequel le marquage repose sur la priorité supérieure de rejet en utilisant la conservation de la Classe d'Ordonnancement des Paquets.

14. Procédé selon la revendication 8, dans lequel le marquage repose sur la définition d'une sous-classe dégradée par Classe d'Ordonnancement des Paquets.

15. Procédé selon la revendication 7, dans lequel l'indication est poursuivie jusqu'à ce qu'une topologie sans boucle soit clarifiée en faisant en sorte que le saut suivant le long du chemin alternatif le plus court déclenche son propre saut suivant pour acheminer le trafic le long du chemin alternatif le plus court en direction de la première destination, et répète cette opération tant qu'un noeud sans boucle pour la première destination n'est pas atteint.
